# EUROPEAN PATENT SPECIFICATION

(11) **EP 0 499 135 B1**
(45) Date of publication and mention of the grant of the patent: **30.11.1994**
(21) Application number: 92101943.6
(22) Date of filing: 06.02.1992
(51) Int. Cl.: F16H 55/26, B29D 29/08, E05F 11/48

(54) **A toothed, flexible transmission cable, a method for its manufacture, and a transmission mechanism including the cable**
Biegsames Übertragungskabel mit Verzahnung, Verfahren zu seiner Herstellung und eine solches umfassende Getriebevorrichtung
Câble de transmission flexible et cranté, sa méthode de fabrication et mécanisme de transmission le comprenant

(30) Priority: 15.02.1991 IT TO910111
(43) Date of publication of application: 19.08.1992
(73) Proprietor: GATE S.p.A., I-14100 Asti (IT)
(72) Inventor: Perosino, Alessandro, I-10128 Torino (IT)
(74) Representative: Saconney, Piero

(56) References cited:
- DE-A- 2 264 072
- GB-A- 2 061 138
- US-A- 4 309 375
- US-A- 4 395 298

## Description

The present invention relates to flexible cables for mechanical traction and thrust transmissions and concerns in particular a cable of this type which is constituted by an elongate cylindrical body of thermoplastic material, with or without a central reinforcing core, and formed with an external series of projections and recesses constituting a set of teeth (see, for example, the document DE-A-2 264 072).

The prior art abounds with transmission cables of this type, in which the sets of teeth are constituted by a series of annular projections and corresponding annular recesses, or by continuous helical projections and corresponding continuous helical recesses.

Examples of cables of this type are described in the documents DE-A-2 264 072, IT-B-1 130 529, US-A-4 402 160, EP-A-0 199 417 (& US-A-4 767 386).

Most of the cables according to these documents do not have canonical shapes.

Canonical shapes means, in particular, shapes with toothed profiles such that they can establish continuous surface contact with a conjugate set of teeth, particularly an involute set of teeth with straight, helical or herring-bone teeth.

It is not possible, in practice, to form pairs of gears with precisely conjugate sets of teeth with cables whose sets of teeth are not canonical in shape; the contacts between the teeth of the cable and those of the gear meshed therewith will always be limited so that there are undesirable concentrations of pressure or similarly undesirable slippages.

A certain improvement of the situation can be achieved with toothed cables of the type described in the documents IT-B-1 130 529 and US-A-4 402 160, the teeth of which have the profiles normally used for racks. In this case also, however, the sets of teeth mesh with a conjugate gear only in a plane which contains the axis of the cable and is perpendicular to the axis of the gear, whilst in all the other regions on either side of this plane there is no certain contact between the teeth.

An object of the present invention is to provide a flexible cable of the type in question which enables perfect meshing with a conjugate gear without localised pressures and without slippage.

According to the invention, this object is achieved by means of a flexible cable, characterised in that the body of thermoplastic material has at least one rack in the form of a set of teeth stamped in its surface and having teeth with cross-sections which are uniform along cords of the cylinder.

Throughout the present description and in the claims, a rack means a cylindrical gear with an infinite pitch-circle radius. Moreover, the definitions given in the description and in the claims relate to a flexible cable in the rectilinear rest condition.

By virtue of this concept, it is possible to produce a cable with a canonical set of teeth which are adapted to mesh perfectly with a gear which also has a canonical set of teeth, particularly with involute profiles.

A cable according to the invention can be applied to a transmission mechanism with a single gear or with several gears with parallel axes.

In the case of a mechanism with a single gear or several gears on the same side of the cable, a cable with a single rack is sufficient. If the mechanism includes gears with parallel axes situated on either side of the cable, the cable will have two diametrally-opposed racks.

A flexible cable according to the invention may be produced, to advantage, by a method characterised in that a generally cylindrical semi-finished product of thermoplastic material, with or without a central core, is extruded and in that the semi-finished product is then formed continuously by hot deformation by means of at least one revolving tooth-forming member with a peripheral, toothed forming profile which stamps the set of teeth in the semi-finished product along a generatrix thereof, so as to form therein a rack having teeth with cross-sections which are uniform along chords of the cylinder, that is, a canonical set of teeth.

The invention also relates to mechanical transmission devices including one or more toothed cables according to the invention.

The invention will become clear from a reading of the detailed description which follows with reference to the appended drawings, given by way of non-limiting example, in which:
Figure 1 is a perspective view of a portion of cable according to one embodiment of the invention,
Figure 2 is a longitudinal section taken in the plane indicated II-II in Figure 1, on an enlarged scale,
Figure 3 is a transverse section thereof taken in the plane indicated III-III in Figure 2,
Figure 4 is a transverse section similar to that of Figure 3, showing an another embodiment of the cable according to the invention,
Figure 5 is a partially-sectioned, schematic view showing a device for manufacturing a cable such as that of Figure 1,
Figure 6 shows the detail indicated VI in Figure 5, on an enlarged scale,
Figure 7 is a transverse section taken in the plane indicated VII-VII in Figure 5,
Figure 8 is partially a front view and partially a transverse section taken, as indicated, in the plane VIII-VIII in Figure 5,
Figure 9 is a schematic, elevational view of a motor-vehicle door with a window-winder device constituting an example of a mechanical transmission device incorporating cables according to the invention,
Figure 10 shows, mostly in section and on an enlarged scale, a drive unit of the device, indicated X in Figure 9, and
Figure 11 is a partial transverse section taken in the plane indicated XI-XI in Figure 10, on an even larger scale.

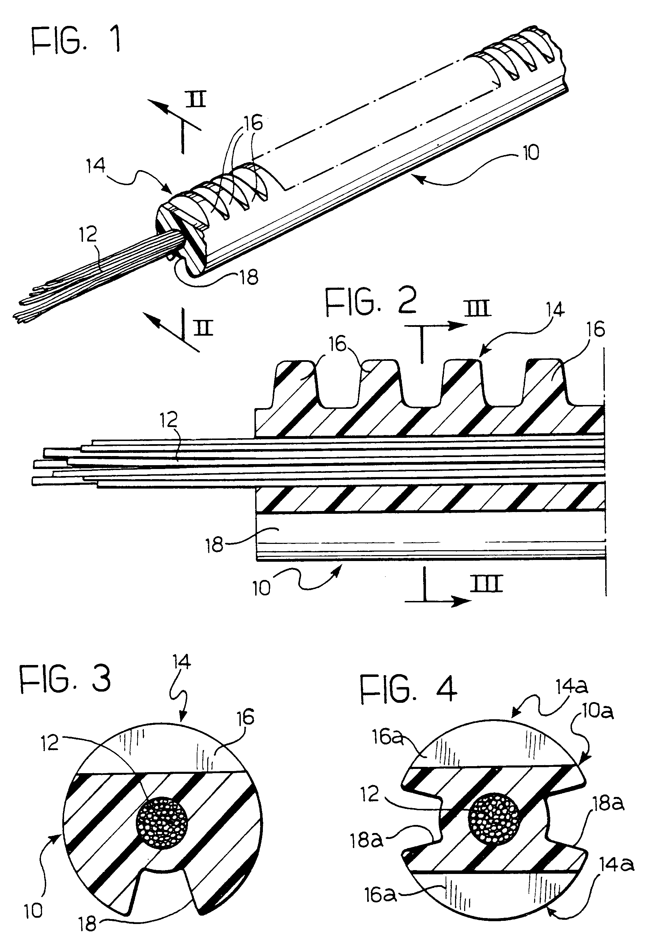

With reference to Figures 1 to 3, a cable according to the invention includes a generally cylindrical, elongate body 10 of indeterminate length. The body 10 is made of a mechanically strong and wear-resistant thermoplastic material such as a polyacetal resin.

A central reinforcing core 12, constituted, for example, by a thin steel wire, is preferably incorporated in the body 10.

In order to give an idea of the possible dimensions of a cable according to the invention, the body 10 may have a diameter of 6 mm and the wire 12 may have a diameter of 1.5 mm with 49 strands.

A rack 14 is stamped in the surface of the body 10. The teeth 16 of the rack 14 have cross-sections which are uniform along chords of the cylinder constituted by the body 10.

In the embodiment shown, which is the simplest and preferred embodiment, the teeth 16 are straight and have straight, flat faces with canonical profiles.

As will be noted from Figure 3, in cross-section, the teeth 16 are shaped like segments of a circle. This means that the height of the cross-section of each tooth decreases from its centre towards its side edges. The canonical profiles of the teeth do not change, however, and they can thus mesh correctly with a conjugate set of teeth of a corresponding gear with an involute set of teeth.

In order to give an idea of the possible dimensions, in the case of a 6mm-diameter cable, the teeth 16 may have a pitch of 2.5 mm and maximum heights of 1.5 mm along the diameter of the cylinder.

A longitudinal groove 18 is stamped in the body 10 in a position diametrally opposite the rack 14 and, as will be seen from the following, acts as an alignment guide. The positioning of the groove 18 diametrally opposite the rack 14 is preferred, but not necessary.

Again, to give an idea of possible dimensions, the depth of the groove 18 is approximately equal to the heights of the teeth 16.

A cable such as that shown in Figures 1 to 3 is suitable for use in a mechanical transmission having only one gear, or several gears all with parallel axes and situated on the same side of the cable, so that they can all mesh with the single rack 14.

In the case of a transmission including two or more gears with parallel axes situated on either side of a cable, a cable such as that shown in transverse section in Figure 4 is used.

The body of the cable of Figure 4, which is also of thermoplastic material, is indicated 10a and is generally cylindrical. The body 10a may also incorporate a central core 12 of thin metal wire.

The body 10a has two diametrally opposed sets of teeth 14a with teeth 16a exactly like the teeth 16 of the body 10 of Figures 1 to 3.

By way of example, two diametrally opposed guide grooves 18a are stamped in the body 10a, between the two sets of teeth 16a. The median planes of the sets of teeth 14a and of the grooves 18a are preferably at 90^{o} to each other.

A cable such as that of Figure 4 could include only one groove 18a.

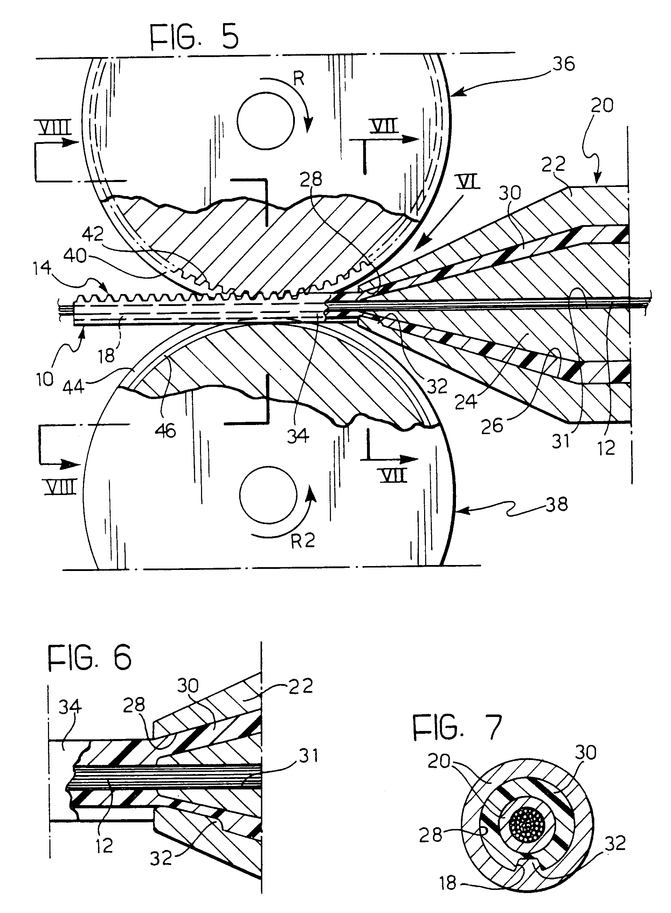

An advantageous method of manufacturing a cable such as that of Figures 1 to 3 will now be described with reference to Figures 5 to 8, it being understood that a similar method can be used, with the necessary alterations to details, to manufacture a cable such as that of Figure 4.

In Figures 5 and 6, an extrusion head, indicated 20, includes a peripheral body 22 and a central core 24.

The body 22 and the core 24 together define an annular duct 26 which converges towards a die orifice 28.

The thermoplastic material which is extruded through the duct 26 to form the body 10 of the cable is indicated 30.

The core 24 of the head 20 has a longitudinal hole 31, through which the wire 12 for forming the core of the cable is fed.

The orifice 28 in the die has an internal tooth or projection 32 which can be seen better in Figures 6 and 7 and which has a profile corresponding to that of the groove 18 of Figures 1 to 3.

The thermoplastic material 30 is extruded through the orifice 28 to form a semi-finished product 34 which, as it is formed, gradually incorporates the wire 12. Apart from the groove 18, the semi-finished product 34 is generally smooth and cylindrical.

Immediately downstream of the orifice 28, the semi-finished product 34 is set but, because of the extrusion temperature, is quite soft. In the case of a polyacetal resin, the temperature at the output of the orifice 28 is preferably between 150° and 160°C.

Immediately downstream of the orifice 28 is a pair of rollers 36 and 38 of which at least the roller 36 is motor-driven. The senses of rotation of the rollers 36 and 38 are indicated by the arrows R₁ and R₂ in Figure 5.

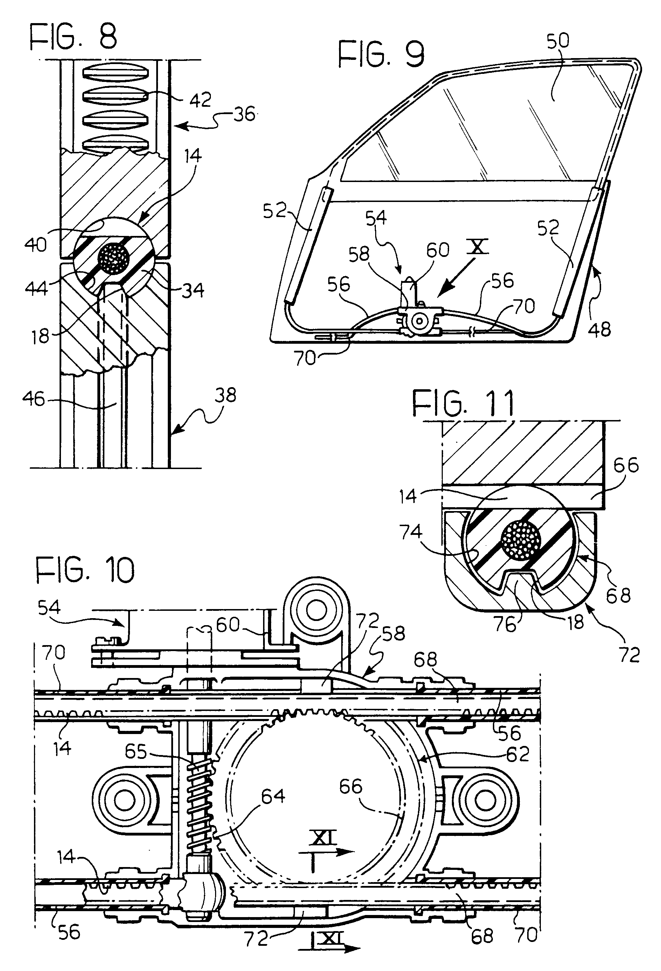

The roller 36 constitutes a revolving tooth-forming member. As shown in Figures 5 and 8, it has a groove 40 of substantially semicircular cross-section which surrounds half of the semi-finished product 34. The base of the groove 40 has a set of teeth, or a peripheral, toothed profile 42 for forming the set of teeth, again indicated 14, to be produced on the cable.

As will be understood, the tooth-forming roller 36 stamps the set of teeth 14 in the semi-finished product 34, which is still soft, as it is gradually extruded. For a perfect set of teeth 14, it is essential that the gear-forming roller 36 is rotated at a speed such that the tangential velocity of the set of teeth 42 along its pitch line in the working region is equal to the speed at which the semi-finished product 34 is extruded.

The roller 38 is a counter-roller which reacts against the tooth-forming roller 36. As shown in Figures 5 and 8, the roller 38 also has a groove 44 of substantially semicircular cross-section which surrounds and houses the other half of the semi-finished product 34. In the base of the groove 44 is an annular rib 46 which exactly engages the longitudinal groove 18 already formed in the semi-finished product 34 and helps to ensure the correct shape of the groove 18 whilst the thermoplastic material is still soft.

Alternatively, the tooth or projection 32 in the orifice 28 could be omitted and the roller 38 could act as a groove-forming member and stamp the continuous groove 18 in the semi-finished product 34 by means of its rib 46.

In order to produce a cable such as that of Figure 4, a system like that of Figure 5 would include a pair of revolving gear-forming members, such as that indicated 36, which are diametrally opposed relative to the semi-finished product 34 and which contrarotate in synchronism in order to stamp the two sets of teeth 14a. The grooves 18a could be formed by a pair of teeth or projections like that indicated 32 in an extrusion orifice like that indicated 28, or by a pair of groove-forming members like that indicated 38, in a "cross-like" arrangement with the two groove-forming members like that indicated 36.

The invention also provides for the use of revolving gear-forming members and/or revolving groove-forming members in the form of continuous belts which are toothed or ribbed, respectively.

The revolving members such as those indicated 36 and 38 may be of steel but the use of members whose working surfaces, such as those of the set of teeth 42 and of the rib 46, are of a synthetic material which is resistant to high temperatures, is also envisaged. A preferred material is polytetrafluoroethylene, known by the trade name "Teflon", which has a melting point of between 270°C and 305°C.

Reference will now be made to Figures 9 to 11 to describe an example of a mechanical transmission device using a cable such as, for example, that of Figures 1 to 3.

The transmission device is similar to that described and shown in co-pending European Patent Application No. 91121520.0 (EP-A-0 491 320).

Figure 9 shows a motor-vehicle door 48 including a window 50 which can be lowered. The front and rear edges of the window 50 are guided in respective opposed parallel channels, both indicated 52.

A reversible drive unit, generally indicated 54, is mounted in the lower region of the door 48 in a position intermediate the channels 52. Certain details of the unit 54 will be described with reference to Figure 10 and 11.

A transmission member 56 which moves the window 50 up and down extends from the drive unit 54 towards each of the channels 52.

With reference now to Figures 9 and 10, the drive unit 54 includes a body 58 on which a reversible electric motor 60 is mounted.

A gear 62, rotatable in the body 58, has a set of teeth 64 meshed with a worm screw 65 which is rotated by the motor 60. The gear 62 also includes another set of teeth 66 which will be mentioned further below.

Each transmission member 56 includes a sheath which is flexible or can be shaped and in which a toothed, flexible cable 68, such as that of Figures 1 to 3, is slidable.

Outlet tubes, in which the excess portions of the toothed cables 68 are slidable, are indicated 70.

The sets of teeth of the toothed cables 68, again indicated 14, are meshed with diametrally-opposed regions of the set of teeth 66 of the gear 62. As will be understood, the rotation of the double gear 62 moves the two toothed cables 68 in synchronism in opposite directions.

In order to ensure that, in correspondence with the set of teeth 66, each of the cables 68 is oriented about its own axis so that its set of teeth 14 is correctly meshed with the set of teeth 66, the body 58 has corresponding guide blocks 72 in the meshing regions.

An example of a block 72 is shown in Figure 11. As can be seen in Figure 11, each block 72 has a partially cylindrical cavity 74 which surrounds the respective portion of the cable 68 in the region in which its set of teeth 14 is meshed with the set of teeth 66 of the gear 62 so that it serves as a counterthrust member and houses the cable 68.

The cavity 74 has a projection, rib or tooth 76 which is engaged like a spline in the longitudinal groove 18 to ensure the correct orientation of the set of teeth 14 relative to the teeth 66.

## Claims

1. A flexible cable for mechanical traction and thrust transmissions, constituted by an elongate cylindrical body (10; 10a) of thermoplastic material, with or without a central reinforcing core (12) and formed with an external series of projections and recesses constituting a set of teeth (14; 14a), characterised in that the elongate cylindrical body (10; 10a) of thermoplastic material has at least one rack in the form of a set of teeth (14;14a) stamped in its surface and having teeth (16; 16a) with cross-sections which are uniform along chords of the cylinder.

2. A flexible cable according to Claim 1, characterised in that the body (10; 10a) also has at least one longitudinal guide groove (18,; 18a) stamped in its surface.

3. A flexible cable according to Claim 2, characterised in that the body (10) has a set of teeth (14) and a longitudinal groove (18) which are diametrally opposite each other.

4. A flexible cable according to Claim 1 or Claim 2, characterised in that the body (10a) has two diametrally-opposed sets of teeth (14a).

5. A flexible cable according to Claim 4, characterised in that the body (10a) has two diametrally-opposed keying grooves (18a) between the sets of teeth (14a).

6. A method of manufacturing a toothed flexible cable for mechanical traction and thrust transmissions according to any of claims 1 to 5, characterised in that a generally cylindrical, semi-finished product (34) of thermoplastic material, with or without a central core (12), is extruded, and in that the semi-finished product (34) is then formed continuously by hot deformation by means of at least one revolving tooth-forming member (36) having a peripheral, toothed forming profile (42) which stamps the set of teeth (14) in the semi-finished product (34) along a generatrix thereof, so as to form therein a rack (14), the teeth (16) of which have cross-sections which are uniform along chords of the cylinder.

7. A method according to Claim 6, characterised in that, during the continuous hot-deformation, the semi-finished product (34) is subject to the action of at least one revolving groove-forming member (38) having a peripheral rib (46) which stamps a longitudinal guide groove (18) in the semi-finished product (34).

8. A method according to Claim 7, characterised in that a single tooth-forming member (36) and a single groove-forming member (38) are used and act on the thermoplastic material of the semi-finished product (34) along diametrally opposed generatrices thereof.

9. A method according to Claim 7 or Claim 8, characterised in that two tooth-forming members (36) are used and act on the thermoplastic material of the semi-finished product (34) along respective diametrally-opposed generatrices thereof.

10. A method according to Claim 9, characterised in that two groove-forming members (38) are used and act on the thermoplastic material along respective opposed generatrices, between those along which the tooth-forming members (36) act.

11. A method according to any one of Claims 6 to 10, characterised in that the or each tooth-forming member used is a toothed roller (36).

12. A method according to any one of Claims 6 to 10, characterised in that the or each tooth-forming member used is a toothed belt.

13. A method according to any one of Claims 6 to 12, characterised in that the or each groove-forming member is a ribbed roller (38).

14. A method according to any one of Claims 6 to 12, characterised in that the or each groove-forming member used is a ribbed belt.

15. A method according to any one of Claims 6 to 12, characterised in that the or each groove-forming member used is constituted by an internal projection (32) in a die (28) for extruding the semi-finished product (34).

16. A method according to any one of Claims 6 to 15, characterised in that the continuous hot deformation is carried out directly at the output of an extruder (20), and makes use of the extrusion heat.

17. A method according to any one of Claims 6 to 16, characterised in that the continuous hot deformation is effected by members (36, 38) which are separate from the extruder (20), after the semi-finished extruded product (34) has been reheated.

18. A mechanical transmission device of the type including a fixed duct (74), a flexible, toothed cable (68) slidable in the duct (74), and at least one gear (66) meshed with the toothed cable (68), characterised in that the toothed cable (68) is of the type defined in any one of Claims 2 to 5, so that it has at least one longitudinal groove (18), and in that, at least in correspondence with or near the gear (66), the duct (74) has at least one internal spline (76) which is engaged in the respective groove (18) in the cable (68) to keep the cable oriented about its own axis so that its set of teeth (14) or one of its sets of teeth is kept meshed with the gear (66).

## Patentansprüche

1. Flexibles Kabel für mechanische Zug- und Schubübertragungen, das aus einem länglichen, zylindrischen Körper (10, 10a) aus Thermoplastmaterial mit oder ohne eine verstärkende Seele (12) in der Mitte besteht und mit einer äußeren Reihe von Vorsprüngen und Vertiefungen vorsehen ist, die eine Gruppe von Zähnen (14; 14a) bilden, **dadurch gekennzeichnet,** daß der längliche, zylindrische Körper (10; 10a) aus Thermoplastmaterial wenigstens eine Zahnstange in Form einer Gruppe von Zähnen (14; 14a) aufweist, die in seine Oberfläche gepreßt ist, und Zähne (16; 16a) mit Querschnitten hat, die an Sehnen des Zylinders gleichförmig sind.

2. Flexibles Kabel nach Anspruch 1, **dadurch gekennzeichnet,** daß der Körper (10; 10a) des weiteren wenigstens eine Längsführungsnut (18; 18a) aufweist, die in seine Oberfläche gepreßt ist.

3. Flexibles Kabel nach Anspruch 2, **dadurch gekennzeichnet,** daß der Körper (10) eine Gruppe von Zähnen (14) und eine Längsnut (18) aufweist, die einander diametral gegenüberliegen.

4. Flexibles Kabel nach Anspruch 1 oder Anspruch 2, **dadurch gekennzeichnet,** daß der Körper (10a) zwei einander diametral gegenüberliegende Gruppen von Zähnen (14a) aufweist.

5. Flexibles Kabel nach Anspruch 4, **dadurch gekennzeichnet,** daß der Körper (10a) zwei einander diametral gegenüberliegende Keilnuten (18a) zwischen den Gruppen von Zähnen (14a) aufweist.

6. Verfahren zur Herstellung eines mit Zähnen versehenen flexiblen Kabels für mechanische Zug- und Schubübertragungen gemäß einem der Ansprüche 1 bis 5, dadurch gekennzeichnet, daß ein im allgemeinen zylindrisches, halbfertiges Erzeugnis (34) aus Thermoplastmaterial mit oder ohne eine mittlere Seele (12) extrudiert wird, und dadurch, daß das halbfertige Erzeugnis (34) anschließend durch Warmumformen mittels wenigstens eines sich drehenden zahnbildenden Elementes (36) mit einem gezahnten Umfangs-Formprofil (42) kontinuierlich geformt wird, das die Gruppe von Zähnen (14) in das halbfertige Erzeugnis (34) an einer Erzeugenden desselben preßt, so daß darin eine Zahnstange geformt wird, deren Zähne (16) Querschnitte haben, die an sehnen des Zylinders gleichförmig sind.

7. Verfahren nach Anspruch 6, **dadurch gekennzeichnet,** daß bei dem kontinuierlichen Warmumformen wenigstens ein sich drehendes nutformendes Element (38) mit einem Umfangssteg (46), der eine Längsführungsnut (18) in das halbfertige Erzeugnis (34) preßt, auf das halbfertige Erzeugnis (34) wirkt.

8. Verfahren nach Anspruch 7, **dadurch gekennzeichnet,** daß ein einzelnes zahnformendes Element (36) und ein einzelnes nutformendes Element (38) eingesetzt werden und auf das Thermoplastmaterial des halbfertigen Erzeugenden (34) an einander diametral gegenüberliegenden Erzeugenden desselben wirken.

9. Verfahren nach Anspruch 7 oder Anspruch 8, **dadurch gekennzeichnet,** daß zwei zahnformende Elemente (36) eingesetzt werden und auf das Thermoplastmaterial des halbfertigen Erzeugnisses (34) an entsprechenden einander diametral gegenüberliegenden Erzeugenden desselben wirken.

10. Verfahren nach Anspruch 9, **dadurch gekennzeichnet,** daß zwei nutformende Elemente (38) eingesetzt werden und auf das Thermoplastmaterial an entsprechenden einander gegenüberliegenden Erzeugenden zwischen denen wirken, an denen die zahnformenden Elemente (36) wirken.

11. Verfahren nach einem der Ansprüche 6 bis 10, **dadurch gekennzeichnet,** daß das oder jedes zahnformende Element eine Zahnwalze (36) ist.

12. Verfahren nach einem der Ansprüche 6 bis 10, **dadurch gekennzeichnet,** daß das oder jedes zahnformende Element ein Zahnriemen ist.

13. Verfahren nach einem der Ansprüche 6 bis 12, **dadurch gekennzeichnet,** daß das oder jedes nutformende Element eine mit Steg versehene Walze (38) ist.

14. Verfahren nach einem der Ansprüche 6 bis 12, **dadurch gekennzeichnet,** daß das oder jedes eingesetzte nutformende Element ein mit Steg versehener Riemen ist.

15. Verfahren nach einem der Ansprüche 6 bis 12, **dadurch gekennzeichnet,** daß das oder jedes eingesetzte nutformende Element durch einen inneren Vorsprung (32) in einer Düse (28) zum Extrudieren des halbfertigen Erzeugnisses (34) gebildet wird.

16. Verfahren nach einem der Ansprüche 6 bis 15, **dadurch gekennzeichnet,** daß die kontinuierliche Warmumformung direkt am Ausgang eines Extruders (20) ausgeführt wird und die Extrusionswärme ausnutzt.

17. Verfahren nach einem der Ansprüche 6 bis 16, **dadurch gekennzeichnet,** daß die kontinuierliche Warmumformung durch Elemente (36, 38) ausgeführt wird, die von dem Extruder (20) getrennt sind, nachdem das halbfertige extrudierte Erzeugnis (34) wieder erwärmt worden ist.

18. Mechanische Übertragungsvorrichtung der Art, die einen stationären Kanal (74), ein flexibles gezahntes Kabel (68), das in dem Kanal (74) gleitet, sowie wenigstens ein Zahnrad (66), das mit dem gezahnten Kabel (68) in Engriff ist, umfaßt, **dadurch gekennzeichnet,** daß das gezahnte Kabel (68) von der in einem der Ansprüche 2 bis 5 definierten Art ist, so daß es wenigstens eine Längsnut (18) aufweist, und dadurch, daß übereistimmend mit oder in der Nähe das Zahnrades (66) der Kanal (74) wenigstens ein inneres Keilprofil (76) aufweist, das in die entsprechende Nut (18) in dem Kabel (68) eingreift, und das Kabel so um seine eigene Achse ausgerichtet hält, so daß seine Gruppe von Zähnen (14) oder eine seiner Gruppen von Zähnen mit dem Zahnrad (66) in Eingriff gehalten wird.

## Revendications

1. Câble flexible pour transmissions de poussée et de traction mécaniques, constitué par un corps cylindrique allongé (10 ; 10a) en matériau thermoplastique, avec ou sans un noyau de renforcement central (12) et formé avec une série externe de saillies et de creux constituant un jeu de dents (14 ; 14a), caractérisé en ce que le corps cylindrique allongé (10 ; 10a) en matériau thermoplastique comporte au moins une crémaillère sous la forme d'un jeu de dents (14 ; 14a) découpée dans sa surface et ayant des dents (16 ; 16a) avec des sections transversales qui sont uniformes suivant les cordes du cylindres.

2. Câble flexible suivant la revendication 1, caractérisé en ce que le corps (10 ; 10a) comporte également au moins une rainure de guidage longitudinale (18 ; 18a) découpée dans sa surface.

3. Câble flexible suivant la revendication 2, caractérisé en ce que le corps (10) comporte un jeu de dents (14) et une rainure longitudinale (18) qui sont diamétralement opposés l'un par rapport à l'autre.

4. Câble flexible suivant la revendication 1 ou la revendication 2, caractérisé en ce que le corps (10a) comporte deux jeux de dents diamétralement opposés (14a).

5. Câble flexible suivant la revendication 4, caractérisé en ce que le corps (10a) comporte deux rainures de calage (18a) entre les jeux de dents (14a).

6. Procédé de fabrication d'un câble flexible denté pour transmissions de traction et de poussée mécaniques selon l'une quelconque des revendications 1 à 5, caractérisé en ce qu'un produit semi-fini (34) généralement cylindrique en matériau thermoplastique, avec ou sans un noyau central (12), est extrudé, et en ce que le produit semi-fini (34) est ensuite formé en continu par déformation à chaud au moyen d'au moins un élément tournant de formage de dent (36) ayant un profil de formage denté (42) périphérique qui découpe le jeu de dents (14) dans le produit semi-fini (34) le long d'une génératrice de celui-ci, afin d'y former une crémaillère dont les dents (16) ont des sections transversales qui sont uniformes suivant les cordes du cylindre.

7. Procédé selon la revendication 6, caractérisé en ce que, durant la déformation à chaud continue, le produit semi-fini (34) est soumis à l'action d'au moins un élément tournant de formage de rainure (38) ayant une nervure périphérique (46) qui découpe une rainure de guidage longitudinale (18) dans le produit semi-fini (34).

8. Procédé selon la revendication 7, caractérisé en ce qu'un élément unique de formage de dent (36) et un élément unique de formage de rainure (38) sont utilisés et agissent sur le matériau thermoplastique du produit semi-fini (34) le long de leurs génératrices diamétralement opposées.

9. Procédé selon la revendication 7 ou la revendication 8, caractérisé en ce que deux éléments de formage de dent (36) sont utilisés et agissent sur le matériau thermoplastique du produit semi-fini (34) le long de leurs génératrices respectives diamétralement opposées.

10. Procédé selon la revendication 9, caractérisé en ce que deux éléments de formage de rainure (38) sont utilisés et agissent sur le matériau thermoplastique le long de génératrices respectives opposées, entre celles le long desquelles les éléments de formage de dent (36) agissent.

11. Procédé selon l'une quelconque des revendications 6 à 10, caractérisé en ce que le ou chaque élément de formage de dent utilisé est un rouleau denté (36).

12. Procédé selon l'une quelconque des revendications 6 à 10, caractérisé en ce que le ou chaque élément de formage de dent utilisé est une courroie dentée.

13. Procédé selon l'une quelconque des revendications 6 à 12, caractérisé en ce que le ou chaque élément de formage de rainure est un rouleau nervuré (38).

14. Procédé selon l'une quelconque des revendications 6 à 12, caractérisé en ce que le ou chaque élément de formage de rainure utilisé est une courroie nervurée.

15. Procédé selon l'une quelconque de revendications 6 à 12, caractérisé en ce que le ou chaque élément de formage de rainure utilisé est constitué d'une saillie interne (32) dans une matrice (28) pour extruder le produit semi-fini (34).

16. Procédé selon l'une quelconque des revendications 6 à 15, caractérisé en ce que la déformation à chaud continue est exécutée directement à la sortie d'une extrudeuse (20), et utilise la chaleur d'extrusion.

17. Procédé selon l'une quelconque des revendications 6 à 16, caractérisé en ce que la déformation à chaud continue est effectuée par des éléments (36, 38) qui sont séparés de l'extrudeuse (20), après que le produit semi-fini extrudé (34) ait été réchauffé.

18. Dispositif de transmission mécanique du type comprenant un conduit fixe (74), un câble flexible denté (68) coulissant dans le conduit (74), et au moins un pignon (66) engrené avec le câble denté (68), caractérisé en ce que le câble denté (68) est du type défini dans l'une quelconque des revendications 2 à 5, de sorte qu'il comprend au moins une rainure longitudinale (18) et en ce que, au moins en correspondance avec ou près du pignon (66), le conduit (74) à au moins une cannelure interne (76) qui est engagée dans la rainure respective (18) dans le câble (68) pour maintenir le câble orienté autour de son propre axe, de sorte que son jeu de dents (14) ou l'un de ses jeux de dents est maintenu engrené avec le pignon (66).
